# EUROPEAN PATENT SPECIFICATION

(11) **EP 1 202 856 B1**
(45) Date of publication and mention of the grant of the patent: **26.07.2006**
(21) Application number: 00930393.4
(22) Date of filing: 05.05.2000
(51) Int. Cl.: B32B 1/08, B32B 5/16, B32B 27/36, B32B 27/00, B32B 27/34, B32B 27/08, B05D 5/00, B05D 1/36, B05D 1/28, B41L 35/14, B41L 23/04, B41L 41/00, B41F 31/00, B41F 31/02

(54) **FILM STRUCTURES CONTAINING OXYGEN SCAVENGING COMPOSITIONS AND METHOD OF APPLICATION**
FILMSTRUKTUREN MIT SAUERSTOFFFÄNGERN UND METHODE ZU DEREN AUFTRAGUNG
STRUCTURES DE FILMS CONTENANT DES COMPOSITIONS CAPTANT L'OXYGENE ET LEUR PROCEDE D'APPLICATION

(30) Priority: 20.05.1999 US 315930
(43) Date of publication of application: 08.05.2002
(73) Proprietor: PECHINEY EMBALLAGE FLEXIBLE EUROPE, 92843 Rueil Malmaison (FR); Hormel Foods, LLC, Austin, MA 55912 (US)
(72) Inventor: HUNT, Thomas, F., Appleton, WI 54914 (US); GALLOWAY, Deane, Appleton, WI 54911 (US); MILLER, Daniel, S., Austin, MN 55912 (US)
(74) Representative: McNally, Roisin
(86) International application number: PCT/US2000/012304
(87) International publication number: WO 2000/071334

(56) References cited:
- EP-A- 0 583 727
- WO-A-94/09084
- WO-A-99/05922
- US-A- 5 143 763
- US-A- 5 153 038
- US-A- 5 437 911
- US-A- 5 529 833
- US-A- 5 641 425
- US-A- 5 830 545
- US-A- 5 874 155

## Description

### Field of the Invention

The present invention relates to polymeric film structures wherein an oxygen scavenging composition is coated onto the inside surface layer of the polymeric film structure. The present invention further relates to a method for applying the oxygen scavenging composition to the inside surface of the polymeric film structures as well as the oxygen scavenging compositions themselves and to methods of their preparation.

### Background of the Art

In many commercial applications such as the packaging of foods, beverages, pharmaceuticals and articles of manufacturing, it is desirable to remove gases from the inside of the sealed package or container. These gases are present due to the incomplete evacuation of the package or container after sealing, and/or penetration of gases from the outside environment into the sealed package or container. Regardless of the source, if these gases are not removed or controlled by conversion to a non-harmful state, they could have a deleterious effect on the article which is contained in the package or container. Therefore, there is a need in the packaging industry to develop methods for the removal or control of these gases that is cost-efficient, safe for packaged article, free of liability to the packager and in compliance with governmental safety and health regulations.

Oxygen [O₂] is one of the gases which if left unaddressed could be destructive over time to the article contained in the package or container. Therefore, it is beneficial to remove or control the entrapped oxygen which is present in the sealed package or container. This entrapped oxygen can result from incomplete evacuation of the package or container before sealing. Entrapped oxygen can also result from the permeation of oxygen from the outside of the package or container through the various layers which make up the polymeric package or container even though these structures may contain an oxygen barrier layer. Therefore, this entrapped oxygen contaminant which is sometimes referred to as headspace oxygen, must be removed or controlled if the packaged article is to enjoy a longer shelf life and reach the consumer in an unaltered state.

A number of methods have been developed in the packaging art to address the removal of entrapped oxygen. The most fundamental, of course, would be the complete purging of the oxygen from the package or container before sealing using an inert gas such as nitrogen. However, this method while effective for the removal of a high percentage of oxygen, does not remove all of the entrapped oxygen and does not address the entrapped oxygen which resulted from the permeation of oxygen from outside the container or package. Since purging is an inadequate method for the removal of entrapped oxygen, the packaging industry began to develop the use of oxygen scavenging compositions or compounds to care for the entrapped oxygen in packages or containers.

Oxygen scavenging is a function provided by a physical or chemical system in which the chemical action or activity of oxygen molecules, O₂, are inhibited or neutralized. While one might devise a *physical* system possessing oxygen scavenging ability (for example, a system based on interactions with light or electric, magnetic, or other electromagnetic fields), most O₂-scavenging systems are *chemically* based, relying on oxygen scavenging.

Oxygen scavenger are substances, chemicals, or mixtures of these which have an affinity (chemical, physical or both) for oxygen molecules (usually, from the air), absorbing, binding, or reacting with them and thereby diminishing the usual effects of these oxygen molecules. The scavenger may be provided in solid, liquid, or gaseous forms, and when and where they are used, it is usually preferred that they bind or react with oxygen in order to prevent oxidation, corrosion, rancidification, or aerobic microbial growth (such as mold formation) in materials or in systems where protection from such harmful effects of oxygen is desired. It is also usually preferred that such oxygen scavengers do not interact with the materials or systems they are designed to protect from the effects of oxygen, at least to the degree that the functions and properties of these materials or systems are not unfavorably affected.

The packaging industry has utilized oxygen scavenging compositions or compounds in various ways. One way is to incorporate the oxygen scavenging compositions or compounds into one of the film layers of the package or container. However, this method has several disadvantages, i.e., discolors film, alters film properties, slows activation and oxygen uptake. Another way is to house the oxygen scavenging composition in packets known as sachets. Again there are several disadvantages to the use of sachets. The oxygen scavenging composition used in sachets is usually a finely divided brown/black powder which may be visually unappealing to the consumer. Also, the sachets may inadvertently be ingested by the consumer which would present possible liability problems for the packager.

Yamada et al. (U.S. Patent No. 5,413,763) discloses a multi-layer film structure having an iron-based oxygen scavenging material dispersed in an internal film layer and a layer or layers of film in between the oxygen scavenging containing layer and the food product so as to protect the food product from contamination with the oxygen scavenging material while maintaining oxygen permeability.

Farrell et al. (U.S. Patent No. 4,536,409) discloses a multi-layer blow molded plastic container which incorporates an oxygen scavenging containing layer. An interior "protective" layer next to the food or liquid product is disclosed.

Zenner (U.S. Patent No. 5,492,742) discloses an oxygen scavenger such as transition metal which is incorporated into a polymer carrier and applied to film structures. [Note, col. 12, line 5-20]

Inoue (U.S. Patent No. 4,769,175) discloses a sheet-like oxygen scavenger in which an iron-based oxygen scavenging is contained in a fibrous-type material. An oxygen permeable membrane may be utilized to isolate foods from scavenger contamination.

Despite the technology already known for the use of oxygen scavenging composition or compounds in the packaging industry, a need still exists for polymeric film structures containing oxygen scavenging composition having improved and long-term oxygen scavenging capabilities, providing visual appeal to the consumer, existing as an affixed part of the film structure and being cost-effective in its application. It is believed that the invention described herewith satisfies the above-identified needs.

### Summary of the Invention

The present invention provides a polymeric film structure having an oxygen scavenging composition securely affixed or coated onto the inside surface or wall of the film structure wherein said film structure is useful for housing food or non-food articles of manufacturing. The present invention also provides for a method of applying the oxygen scavenging composition to the polymeric film structure. It is to be understood that the oxygen scavenging composition is not an integral part of the polymeric film structure but is a composition which is coated or affixed to the inner surface layer of a film structure. The present invention also provides a method for making said oxygen scavenging composition.

In one embodiment of the present invention, the oxygen scavenging composition comprises: 1) a primer layer, 2) a pigmented layer, 3) a scavenger layer and 4) a overcoat layer wherein each layer is independently and sequentially applied one or more times to the polymeric film structure by a flexographic printing press method. It is to be understood that while in a preferred embodiment of the present invention the oxygen scavenging composition comprises a primer layer, a pigmented layer, a scavenger layer and an overcoat layer, other embodiments of the oxygen scavenging composition may only comprise the scavenger layer or the scavenger layer with one or more layers wherein the layers are selected from primer, pigmented or overcoat.

In another embodiment of the present invention, the oxygen scavenging composition comprises: 1) an oxygen scavenger layer containing a mixture of iron, salt and an elastomeric matrix to bind the iron and salt, 2) a coating or topcoat layer, 3) a porous layer which may be exemplified by spun bonded high density polyethylene, and 4) another topcoat layer in contact with the food product. The above-described composition is affixed or coated onto the inside of the package wall.

A further embodiment of the present invention relates to a multilayer polymeric film comprising a printed poly(vinylidene chloride) (PVdC) coated biaxially oriented nylon film laminated to a sealant film wherein said oxygen scavenging composition is applied or coated onto the inside surface of the polymeric film structure.

A further embodiment of the present invention relates to a method for applying the oxygen scavenging composition to the inside surface layer of the polymeric film structure by a printing process, preferably the flexographic printing press method.

A still further embodiment of the present invention relates to a method for preparing the various layers of the oxygen scavenging composition.

### Brief Description of the Drawings

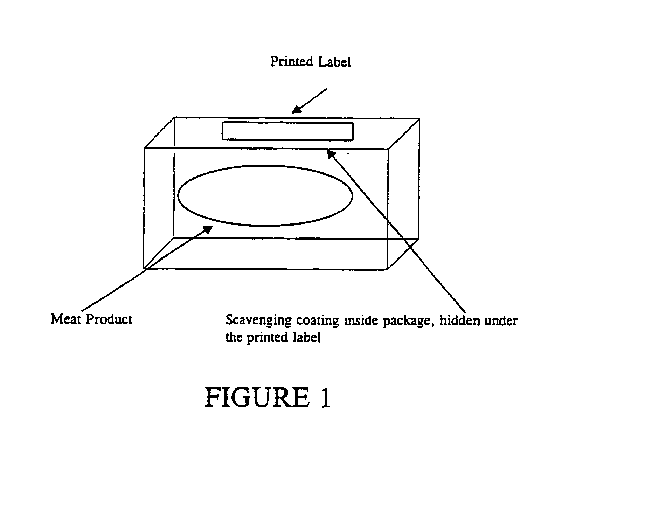

**Figure 1** illustrates a package having the oxygen scavenging composition coated onto the inside of the package under the print material;

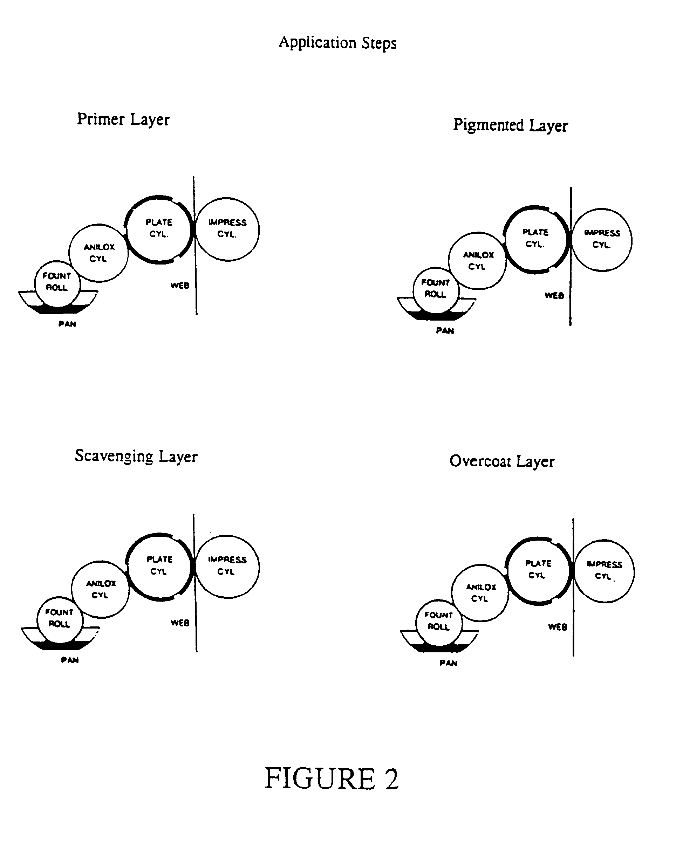

**Figure 2** illustrates the steps for applying an oxygen scavenging composition having a primer layer, a pigmented layer, a scavenger layer and an overcoat layer to a polymeric film structure;

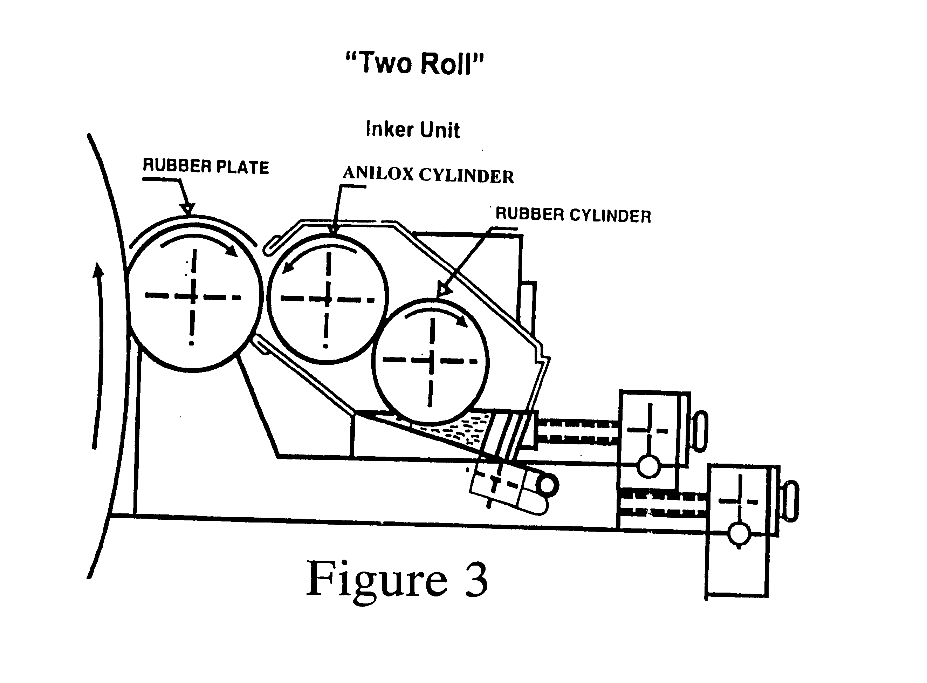

**Figure 3** illustrates a two-roll inker unit;

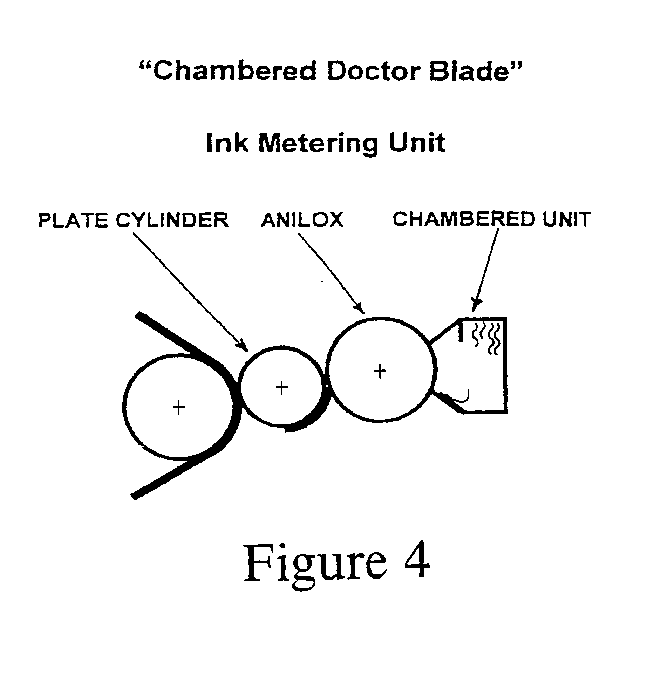

**Figure 4** illustrates a chambered doctor blade inker;

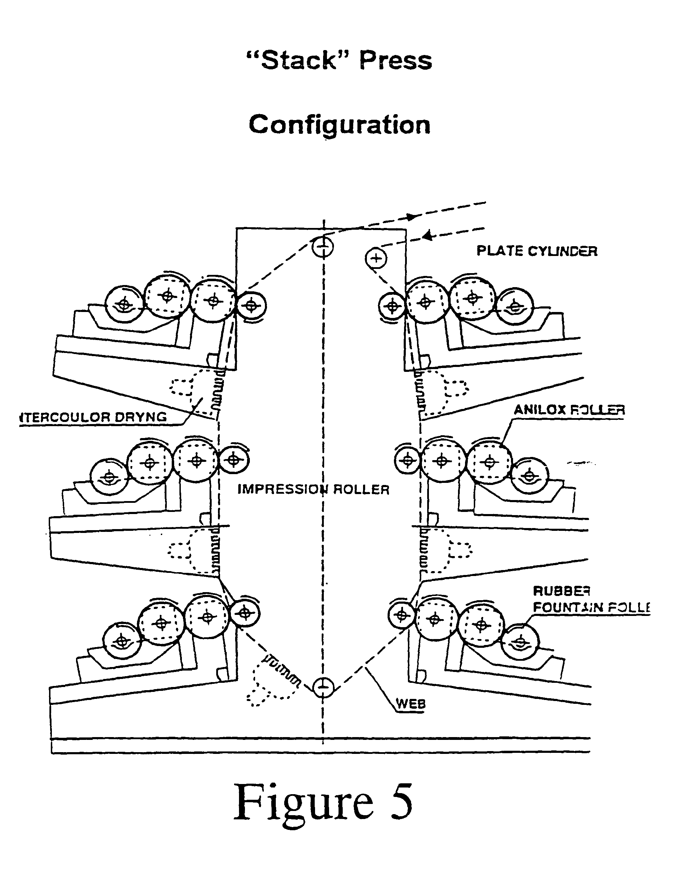

**Figure 5** illustrates a stack press configuration;

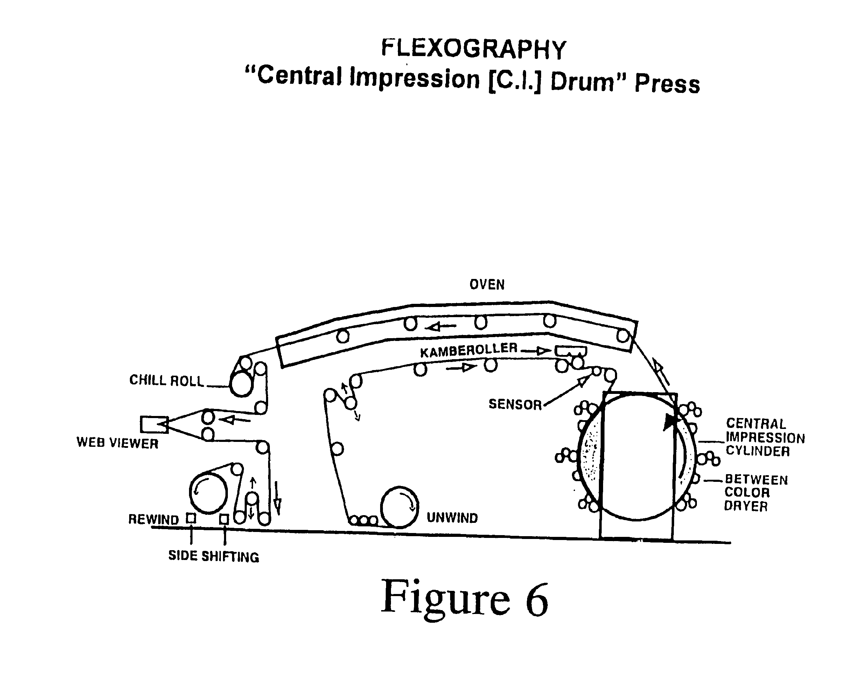

**Figure 6** illustrates a central impression (C.I.) drum press configuration; and

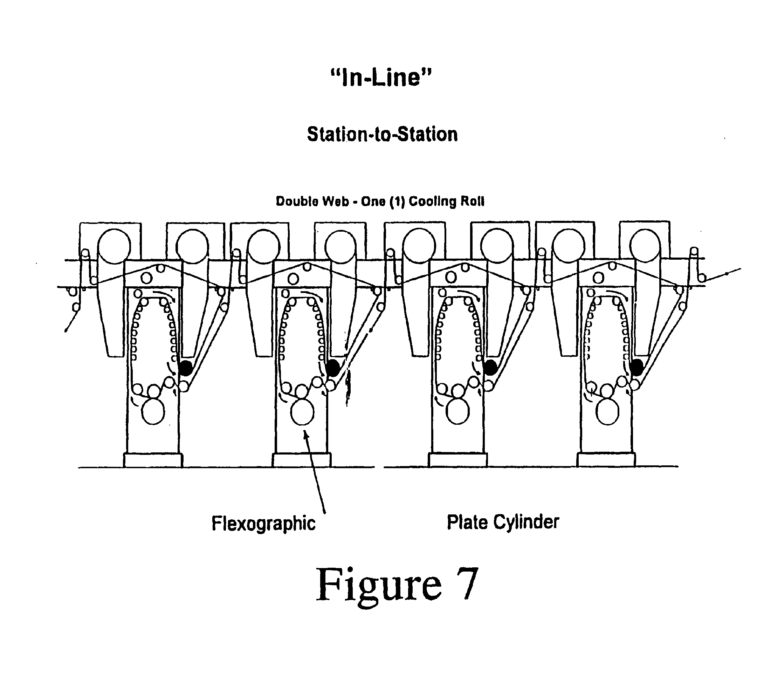

Figure 7 illustrates an "in-line" station-to-station configuration.

### Detailed Description of the Invention

For the purpose of this invention, the oxygen scavenging compound is defined as a substance or combination of substances having an affinity for the oxygen molecules which usually are present in the air or, as in the case with the present invention, in the headspace of the sealed package or container. The oxygen scavenging compound binds or reacts with the oxygen in order to prevent oxidation, corrosion, rancification or aerobic microbial growth in materials which are sealed inside of the packages or containers.

Compounds which would satisfy the above requirements and therefore, be useful in the present invention are exemplified by transition metal oxides which can further be exemplified by an iron oxide compound such as Multisorb SLF made by Multisorb Technologies, Inc., Buffalo, New York.

The term polymeric film structure as used in the practice of this invention refers to a single or multilayer polymeric film structure wherein the polymer can be selected from the group consisting of polyesters (i.e., poly(ethyleneterephthalate); nylons (i.e., poly(s-caprolactam), polypropylenes, polyethylenes; polycarbonates; polyacrylonitrile; polystyrenes; ethylene copolymers (i.e., ethylene vinyl acetate copolymer, ethyl methyl acrylate copolymer; poly(vinylidene chloride) poly(vinylidene chloride methylacrylate) and ionomers having polyethylene and containing metallic ions.) It is understood that these above described polymers can independently comprise one or more layers of the film structure. It is further understood that these polymers can be present either singularly or in combination with other polymers in one or more layers of the film structure. The total film structure can be of any thickness useful in packaging

While applicants have exemplified a number of polymers suitable for the manufacturing of structures as defined herein, it is understood that other polymers) and packaging materials such as foil, paper, cellophane, metallized coatings and glass coatings which would have usefulness in manufacturing polymeric film structure would also be useful in the practice of the invention.

Particularly preferred polymeric film structures used in the present invention are exemplified by the following:
PET/PVdC/Adhesive/Sealant
Nylon/PVdC/Adhesive/Sealant
PP/PVdC/Adhesive/Sealant
PET/Adhesive/coextruded sealant with EVOH
Nylon/Adhesive/coextruded sealant with EVOH
PP/Adhesive/coextruded sealant with EVOH
Nylon/tie/Nylon/EVOH/tie/Sealant
PP/tie/Nylon/EVOH/tie/Sealant
The above abbreviations have the following meanings:
PET poly(ethyleneterephthalate)
PVdC poly(vinylidene chloride)
PP poly(propylene)
EVOH ethylene vinyl alcohol copolymer

The term structure as used in polymeric film structure for the purpose of this invention, can mean rollstock for packaging machines used to produce filled packages and a container made from preformed parts with or without flexible or rigid structures affixed to the preformed parts. Structure as defined for the purpose of this invention can also mean individual preformed parts which are combined to make a finished package or any other product used to produce a filled package.

The inside surface layer is defined for the purpose of this invention as the layer which is on the inside of the structure and the layer which may come in direct contact with the material contained inside the structure that is negatively affected by oxygen.

The oxygen scavenging composition of the present invention comprises: a primer layer, 2) a pigmented layer 3) a scavenger layer and 4) an overcoat layer wherein each layer is independently and sequentially applied one or more times to the sealant/inner layer of the polymeric film structure and wherein each layer except the scavenging layer is optionally present.

### Primer Layer

The primer layer functions as an adhesive. Polymers which are suitable for use in this layer depending on the end use application are: Morton's Adcote Products, INX's Primers, Sun Chemical Primers, Mica Corporation Primers and H.B. Fuller. A particularly preferred product for use as an adhesive is INX AV-16923 from INX's Primers.

The purpose of the primer layer is to enhance the adhesion to the inside surface of the polymeric structure .

### Pigmented Layer

The pigmented layer comprises a pigment which can impart a color and is blended with an ethylene vinyl acetate copolymer emulsion. The pigmented layer may also contain a small amount of the oxygen scavenging compound ranging from zero to 70% by weight based on need. If an oxygen scavenging compound is added to the pigmented layer, it is blended in any appropriate mixer to yield a homogeneous blend. Oxygen scavenging compound added to this layer will enhance the oxygen uptake of the coatings or layers and will also enhance the opacity or "hiding power" of this layer.

### Oxygen Scavenger Layer

The oxygen scavenging layer contains from 5% to 70% by weight of oxygen scavenging compound uniformly suspended in a carrier. In a preferred embodiment of the present invention the oxygen scavenging layer contains 50% by weight of iron oxide and 50% by weight of pigmented blend as described above which is the carrier. It is important that the iron oxide be uniformly disbursed throughout the carrier. Uneven disbursement can compromise the oxygen scavenging capabilities of the composition. If no pigmented compound is used in conjunction with the oxygen scavenging compound then the carrier is an emulsion.

### Overcoat Layer

The overcoat layer comprises a layer which is defined as a resin dissolved in a solvent. After evaporation of the solvent a shiny protective coating remains on top of the oxygen scavenger coating. This layer may also be called the front layer. It is this layer which may come in contact with the material which is sealed inside a package produced for this structure. Resins suitable for use in the overcoat layer are exemplified by providing resistance to attack by the contained product and meeting FDA requirements. A particularly preferred resin for use in the overcoat layer is an ethylene vinyl acetate copolymer base coating supplied by Roymal®.

It is understood that after the complete application of the oxygen scavenging composition, to the polymeric film structure, the oxygen scavenging compound is in an inactive state. Activation of the oxygen scavenging compound begins when the moisture content of the inside of the sealed bag or package created by product reaches a certain level (≈65%r.h.)

Surprisingly, it has been found that a process which is based on a printing process preferably the flexography printing process also provides a method of applying various layers of the oxygen scavenging composition which is discussed above.

Flexography is a letter press process using rubber plates on the plate/cylinder; it occupies a special place in printing on account of the fluidity of its ink. It was first discovered in England in 1890 and was perfected in Strassberg. Flexography printing offers a medium quality printing which is useable for course surfaces such as pasteboard, wrapping paper, plastic or metal film. A complete discussion of flexography printing process can be found in:

| | | |
|---|---|---|
| Reference: Edition | "Foundation of Flexographic Technical Association" Fourth or Fifth | |
| Title: | "FLEXOGRAPHY... Principles and Practices | |
| Address: | Flexographic Technical Association | Phone: (888) 424-2999 |
| | 900 Marconi Avenue | Library of Congress # 91-71436 |
| | Ronkonkoma, New York 11779-7212 | |

The flexographic printing press method offers a higher level of quality production since the coating film on the pattern plate cylinder is isolated only to the specific pattern design and does not contaminate the unprinted (land areas) of the graphic. Package seal areas are not in contact with the plate cylinder since flexographic plates are etched in (relief... 3 dimensional... raised print surface) physically separating application and non-print areas when in contact with the polymeric package film substrate. The flexo press application preserves the integrity of the seal areas. Flexographic pre-printed finished package film structure matches consistently with flexographic post registered print application of the Oxygen Scavenging composition layers. The technique of re-registered printing is applied to the back-side (directly toward the product) and immediately behind the flexo preprinted polymeric package film structure label. Flexographic presses can be adapted to accept re-registered pattern print also known in the printing industry as (re-insertion) or (insetter) capable for the addition of "specialty coatings" i.e., Oxygen Scavenging composition layers hidden behind preprinted labels or graphic to preserve the esthetic quality of the customer graphics and logo and further positions the composition layers with the parameters of the package headspace. The oxygen scavenging composition can be applied in an unlimited number of shapes, designs or patterns, such as dots or bars. In addition, the selected pattern, shape or design can be applied in register. This means that the pattern shape or design which embodies the oxygen scavenging composition is applied in direct alignment with another element of the package such as the printed matter. Registered application is a preferred way of applying the oxygen scavenging composition of the present invention to the polymeric film structure because the oxygen scavenging composition is less visible in the finished package.

The method of the present invention for affixing or coating each layer of the oxygen scavenging composition to the inside surface of a polymeric film structure comprises the following steps:
(a) suspending the material to be affixed or coated to said web structure by use of a metering chambered doctor blade inker unit or a two-roll ink-fountain pan;
(b) transferring the material to be affixed or coated to said web to a fountain roll by rotation of said fountain roll in the chambered doctor blade inker unit or the two-roll ink-fountain pan;
(c) transferring the material to be affixed or coated to said web to an anilox roll by rotation of the fountain roll or the chambered doctor blade directly against the anilox roll;
(d) transferring the material to be affixed or coated to said web structure to the raised impressions of the plate cylinder by rotation of the anilox roll against the plate cylinder;
(e) affixing or coating the material to the polymeric web structure by feeding the polymeric web structure between the plate cylinder which holds the material to be affixed and the impress cylinder;
(f) Drying the coated side of the web by passing said web through an in-line dryer at a temperature between 37.7°C to 121.1 °C (100°F to 250°F); and
(g) Cooling the uncoated side of the web by passing said side over a cooling roll.

It is to be understood that if the oxygen scavenging composition comprises more than one layer, the steps of application which are described above are repeated for each layer that is applied. It is further understood that each layer of the oxygen scavenging composition may be applied more than once. It is also understood that the term web as used in the above-described method refers to the polymeric film structure.

### Preparation of Primer Layer

The primer layer which functions as an adhesion coating anchors the successive layers (Pigmented Layer, Oxygen Scavenger Layer, Overcoat Layer, any combination or additional layer applications) to the inside surface of the polymeric film structures. Primer adhesive is obtained from the manufacturer either by separate compounds or pre-blended to application viscosity. It is preferred to use the manufactured pre-blend to maintain consistency and uniformity of the primer blend. The primer is then ready for immediate use and can be placed into the first flexo printer deck using a standard anilox setup in the inker configuration.

### Preparation of Pigmented Layer

Compounds are weighed to the exact ratio proportions and placed within containers manageable for handling (manual blending) and or raw materials stored for automated metered wet and dry compound mixing. Viscous solutions mixed with dry iron oxide powders require special blending procedures to maintain solid particles of the iron in proper uniform suspension for flexographic printing press application known as (flexo press). Blending and mixing can be performed in several ways using automated blending equipment combined with non-vortex low sheer agitation mixer (bakery type) at low rpm setting exercising care not to entrain air into the formula blend for either the "Pigmented Layer" or the "Oxygen Scavenging Layer" solution for application. This type of mixer is an orbital blender and bowl scraper combined in one unit with opposing mechanical (directional) mixing action simultaneously thus maximizing liquid and solid disbursement for uniformity. Automated (Batching System) blend both viscous and dry powders simultaneously to metered ratios pre-set within the device. The device meters and blends continuously or is pulsed on demand in-line with the flexographic printing press (flexo press) application.

### Preparation of the Oxygen Scavenger Layer

The procedure for preparing the oxygen scavenging layer is identical to the procedure for preparing a blended pigmented layer except for the following: the oxygen scavenger application blend contains uniquely different compounds and ratio formula from the (pigmented layer: optional application) ready to place within the flexo printer deck. The pigmented layer further contains a higher concentration of white or other color ink base within the formula to function as a homogenesis color application to any preprinted label color scheme in the finished package. The oxygen scavenger layer may contain similar compound materials in different ratio blends as compared to the pigmented layer formula, however the principle emulsion and iron particulate compounds exist in both formulas (optional for the pigmented layer). It is essentially the ratio of emulsion and iron particulate that distinguishes the formula's apart when iron particulate is optionally present within the pigmented layer.

### Preparation of the Overcoat Layer

The "Overcoat Layer" also known as the front layer or clear resinated dry shiny top coat is applied with the use of the flexographic printing press (flexo press) process application device. The front layer in solution combines both select resin(s) and solvent to a specific percent solid ratio blended to a functional viscosity for flexo press application. This front layer is known as a "Overcoat Layer" having the full qualification meeting FD&C and FDA requirements for direct food contact. The "Overcoat Layer" solution is a clear non-pigmented compound using potable solvent. Once the appropriate resin and solvent mixture is achieved either by vender preparation (use as received) or in-house blending of raw materials, the pre-blended liquid material "overcoat layer" is placed into a flexo press of either in-line (individual stations with individual impression cylinder) or a single frame (with combined applicator stations) utilizing a common central impression (C.I.) drum or a single or multiple frame (with combined or in tandem applicator stations) known as a stack configuration utilizing an individual impression cylinder for each applicator station also known in the industry as [deck or application station]. Using a selected flexographic press configuration either single or combination applicator 5 decks with or without tandem flexographic application decks, initiating the mechanical flexo applicator by means of any individual or combination thereof to continuously apply the press ready solution to the specified substrate in pattern or non-pattern print form and drying by use of an in-line oven completes the application process for applying all layers as previously described ("Primer Layer", "Pigmented Layer", "Oxygen Scavenging Layer", the "Overcoat Layer"). Each layer is applied once or more than once in order to achieve the full "Oxygen Scavenging Composition" functional result within the product filled package, in it's final structural state. While the coating weights will vary depending on the end-needs, an example of dry coating weights follows: (1) primer 0.02-0.36 kg/ream (0.05-0.81b/ream); (2) pigmented layer 0.91-1.82 kg/ream (2-4lb/ream); (3) oxygen scavenger layer 6.82-9.09 kg/ream (15-201b/ream); and (4) overcoat 1.36-2.27 kg/ream (3-5 1b/ream).

Primer layer application weight ranges from 0.14 kg/ream (.31bs./ream) per 279 sq.m (3000 sq.ft). (dry weight) to 0.36kg/ream (.8lbs./rm) (dry weight). This layer is principle to the first down printed coating which functions as the adhesion anchor layer as discussed earlier. The Pigmented layer (optional application) is a variable formula of compounds to include or exclude the use of iron particulate. This variance distributes the dry weight resulting in a range from 0.68kg/ream (1.5lbs./ream) per 279 sq.m. (3000 sq.ft.) to 3.64kg/ream (8.01bs./ream) when iron particulate is introduced into the solution formula. Modifications to the flexo press inking units which apply the "Pigmented Layer" and "Oxygen Scavenging Composition Layer" are required in order to handle viscous coatings at commercial speeds. Special anilox rolls, coating applicator chambered doctor blades inker units using plastic primary wipe blades and high slip extended containment blades for setup. Blended coatings are delivered to the flexographic press inker stations using peristaltic pumps with in-line static mixing tubes for maintaining the coatings' iron oxide in uniform dispersion; directly to the immediate coating applicator plate at the polymeric film substrate contact point; at the moment of coating transfer actual plate impression or physical printing.

While the present invention relates to a method for applying an oxygen scavenging composition utilizing the principles of the flexographic printing process, other printing processes such as letter press, silk screen, either rotary or flat, and rotogravure could also be utilized in the application of the oxygen scavenging composition of the present invention.

The following examples illustrate preferred embodiments of the invention:
- **Example 1**: Preparation of the Primer Layer - this compound is a "ready-to-use" from the supplier material. No adjustments are typically required to the liquid; material is ready to be pumped into the flexographic print station inker unit by peristaltic pump method. The compound is pumped to the coating applicator chambered doctor blade inker unit. The polymeric film substrate is installed onto the unwind station in the normal press setup procedure. The substrate is then webbed (threaded) into first print station. This station will apply by rotary flexo plate, the first impression primer coating used for adhesion or anchor layer to the polymeric film substrate surface. The standard web path is used for a station-to-station, central impression or stacked flexographic printing press configuration. The operator adjusts the inker unit to apply a thin layer of the primer compound sufficient to meet the required dry coating weight range for proper adhesion properties. After the polymeric substrate web passes through the first print station and receives the first down primer layer, the web passes through a high velocity drying oven positioned in-line to cure the coating to a coalesced, dried ink film state achieving the prescribed weight range (dry application weight.lbs./rm per 3M sq. ft.).
- **Example 2**: Preparation of the Pigmented Layer (Optional) - The pigmented compound material is used for obtaining more graphic opacity to improve appearance and limit 'show-through' to the preprinted label on the polymeric film substrate. As the webbed substrate is pulled through the first print station and exits the dryer oven, it then proceeds to the second print station to receive the (Optional) pigmented layer application. The pigmented compound material is a pre-blended ink supplied by the ink manufacturer as a ready-to-use solution. The ink solution is pumped using a normal peristaltic pump system to deliver the material directly to the inker unit. The ink applicator system may comprise either a two roll or chambered doctor blade unit. The use of this layer is optional both with and without iron particulate added to the formula blend. The pigmented layer is applied by rotary flexo plate and passes into the second station dryer oven to coalesce the coating into a dried ink film layer. The substrate is pulled to the next print station.
- **Example 3**: Applying the Oxygen Scavenger Layer - This layer is the primary reaction layer that functions to reduce residual oxygen within a packaged food product. As the polymeric film substrate web is pulled into the third print station, the oxygen scavenger solution material is pumped using a peristaltic system directly to the inker unit. This unit comprises a two-roll inker applicator or a chambered doctor blade system using plastic blades with extended containment blade. The containment blade is approximately 0.8 cm (.030 inch) in thickness and very flexible. The surface of the blade is treated with high slip agent material rendering a very low coefficient of friction (usually below .10 kinetic). This allows the anilox to return all unused metered oxygen scavenger solution back into the chambered doctor blade cavity. The oxygen scavenger material is applied by rotary flexo plate directly to the substrate. As with stations one and two, the third application layer is positioned in 'register' on the backside of the preprinted polymeric film substrate. Station two is aligned with station one application and station three follows station two in the same 'register' sequence allowing all layer applications to be sandwiched in the same position as the first down layer. All layers are keyed to the original preprinted graphic label by means of an electronic 'Insetter' eye. The fiber optic eye recognizes an existing 'eye mark' from the preprinted graphic label. This enables the register electronics and computer recognition board to align the first down layer coating and sequence all other layers to be positioned in the same location (in stacked layers) registered together. After the oxygen scavenger layer is applied the polymeric substrate web proceeds into the third station dryer oven to coalesce the applied material into a dried film. The substrate is pulled into the fourth or final print station to receive the clear protective coating over all previously applied layers of application.
- **Example 4**: Preparation of the Overcoat Layer - This is a clear protective permeable coating that is applied as the final layer over all previously printed layers to the polymeric film substrate positioned in 'register'. This material is applied by rotary flexo plate directly to the surface of the polymeric film substrate. The clear permeable solution is supplied by the manufacturer as a ready-to-use product with no modification needed to process within a flexographic printer. The overcoat solution is peristaltic pumped to the fourth print station inker unit. The inker unit is either a two roll inker or a chambered doctor blade system. Either unit is capable of metering the coating to the rotary flexo plate for direct application to the polymeric film substrate. The application is applied in 'register' to all previously printed layers in exact position as to form a sandwich of layers located on the backside of the preprinted polymeric film substrate. The substrate is pulled through the fourth station dryer to coalesce the coating into a dried ink film. This is the final layer in sequence and completes the process for oxygen scavenger application and functionality.

## Claims

1. A polymeric film structure having one or more layers wherein an oxygen scavenging composition is coated onto the inside surface layer of the polymeric film structure and wherein said oxygen scavenging composition comprises at least an oxygen scavenging layer, said oxygen scavenging layer being sequentially applied a plurality of times such that each subsequently applied layer is applied in register to all previously applied layers.

2. The polymeric film structure according to Claim 1 herein the oxygen scavenging composition additionally comprises one or more of a primer layer, a pigmented layer, and an overcoat layer.

3. The polymeric film structure according to Claim 1 or 2 wherein the oxygen scavenging composition comprises a primer layer, a pigmented layer, ascavenger layer and an overcoat layer wherein each layer is sequentially applied and wherein any one layer may be applied more than once in the sequences.

4. A polymeric film structure according to Claim 1, Claim 2 or Claim 3 wherein each layer of the oxygen scavenging composition is sequentially applied using a printing method.

5. A polymeric structure according to Claim 4 wherein the printing method is a flexographic printing process.

6. A polymeric film structure according to any of the preceding Claims in which said oxygen scavenging composition is coated onto the inside surface of the polymeric film structure, such that the oxygen scavenging composition is applied in direct alignment with a particular element of the polymeric film structure.

7. A polymeric film structure according to Claim 6 wherein the oxygen scavenging material is applied in direct alignment with the printed matter.

8. The polymeric film structure according to any of the preceding Claims wherein said structure is a printed poly(vinylidene chloride) coated biaxially oriented nylon film laminated to a sealant film.

9. The polymeric film structure according to any of the preceding Claims wherein said structure comprises poly ethyleneterephthalate/poly(vinylidene chloride)adhesive/sealant.

10. A polymeric film structure according to any of the preceding Claims wherein said structure comprises poly(propylene)/poly(vinylidene chloride)/adhesive/sealant.

11. A polymeric film structure according to any of the preceding Claims wherein said structure comprises poly (ethyleneterephthalate/adhesive/coextruded sealant with ethylene vinyl alcohol copolymer.

12. The polymeric film structure according to any of the preceding Claims wherein said film structure is formed from material selected from the group consisting of polyesters, nylons, polypropylenes, polyethylenes, polycarbonates, polyacrylonitrile, polystyrenes, ethylene copolymers, poly(vinylidene chloride methylacrylate) and ionomers having polyethylene and containing metallic ions.

13. The polymeric film structure according to any of the preceding Claims wherein the oxygen scavenger layer comprises an iron oxide compound.

14. The polymeric film structure composition according to any of the preceding Claims wherein the coating weight of the oxygen scavenger layer is in the range of 6.82 kg/ream to 9.09 kg/ream (15lb/ream to 201b/ream).

15. The polymeric film structure according to any of the preceding Claims wherein the oxygen scavenger compound is a substance or combination of substanceshaving an affinity for the oxygen molecules.

16. The polymeric film structure according to any of the preceding Claims which is a transition metal oxide.

17. A method for affixing or coating an oxygen scavenger composition to the inside surface of a polymeric film structure wherein said oxygen scavenging composition comprises at least an oxygen scavenging layer, said oxygen scavenging layer being applied a plurality of times, such that each subsequently applied layer is applied in register to all previously applied layers, and wherein the method for affixing or coating each individual layer of said oxygen scavenger composition comprises the following steps:
(a) suspending the material to be affixed or coated to said web structure by use of a metering chambered doctor blade inker unit or a two-roll ink-fountain pan;
(b) transferring the material to be affixed or coated to said web to a fountain roll by rotation of said fountain roll in the chambered doctor blade inker unit or the two-roll ink-fountain pan;
(c) transferring the material to be affixed or coated to said web to an anilox roll by rotation of the fountain roll or the chambered doctor blade directly against the anilox roll;
(d) transferring the material to be affixed or coated to said web structure to the raised impressions of the plate cylinder by rotation of the anilox roll against the plate cylinder;
(e) affixing or coating the material to the polymeric web structure by feeding the polymeric web structure between the plate cylinder which holds the material to be affixed and the impress cylinder;
(f) drying the coated side of the web by passing said web through an in-line dryer at a temperature between 37.7°C to 121.1°C (100°F to 250 °F);
and
(g) cooling the uncoated side of the web by passing said side over a cooling roll.

18. The method according to claim 17 wherein the oxygen scavenger composition comprises a primer layer; a pigmented layer; an oxygen scavenging layer and an overcoat layer.

19. The method according to Claim 17 or Claim 18 wherein the polymeric film structure is a printed poly(vinylidene chloride) coatedbiaxially oriented nylon film laminated to a sealant film.

20. The method according to Claim 17 Claim 18 or Claim 19 wherein the oxygen scavenger layer comprises an iron oxide compound.

21. The method according to any of claims 17 to 20 wherein any of the layers of the oxygen scavenging composition are applied or coated onto the polymeric film structure more than once.

22. A method for preparing a polymeric film structure comprising an oxygen scavenging composition wherein said oxygen scavenging composition comprises at least an oxygen scavenging layer, said oxygen scavenging layer being applied a plurality of times such that each subsequently applied layer is applied in register to all previously applied layers, and wherein said method comprises coating said oxygen scavenging composition onto said polymeric film structure by a printing process.

23. The method according to claim 22 wherein the printing process is a flexographic printing process.

24. A plastic package comprising the film structure of any of claims 1 to 16.

## Patentansprüche

1. Eine Polymerfilmstruktur mit einer oder mehreren Schichten, wobei eine Sauerstoff ausspülende Zusammensetzung auf die innere Oberflächenschicht der Polymerfilmstruktur aufgetragen wird, und wobei die Sauerstoff ausspülende Zusammensetzung mindestens eine Sauerstoff ausspülende Schicht beinhaltet, wobei die Sauerstoff ausspülende Schicht eine Vielzahl von Malen aufeinanderfolgend aufgebracht wird, so dass jede anschließend aufgebrachte Schicht genau auf alle zuvor aufgebrachten Schichten passt.

2. Polymerfilmstruktur gemäß Anspruch 1, wobei die Sauerstoff ausspülende Zusammensetzung zusätzlich eine oder mehrere aus einer Starterschicht, einer pigmentierten Schicht und/oder einer Mantelschicht beinhaltet.

3. Polymerfilmstruktur gemäß Anspruch 1 oder 2, wobei die Sauerstoff ausspülende Zusammensetzung eine Starterschicht, eine **pigmentierte Schicht, eine Spülmittelschicht und eine Mantelschicht** beinhaltet, wobei jede Schicht aufeinanderfolgend aufgebracht wird, und wobei jedwede Schicht in der Folge mehr als ein Mal aufgebracht werden kann.

4. Polymerfilmstruktur gemäß Anspruch 1, Anspruch 2 oder Anspruch 3, wobei jede Schicht der Sauerstoff ausspülenden Zusammensetzung unter Verwendung eines Druckverfahrens aufeinanderfolgend aufgebracht wird.

5. Polymerstruktur gemäß Anspruch 4, wobei das Druckverfahren ein Flexodruckvorgang ist.

6. Polymerfilmstruktur gemäß einem der vorhergehenden Ansprüche, bei der die Sauerstoff ausspülende Zusammensetzung auf die innere Oberfläche der Polymerfilmstruktur aufgetragen wird, so dass die Sauerstoff ausspülende Zusammensetzung in direkter Deckung mit einem bestimmten Element der Polymerfilm,struktur aufgebracht wird.

7. Polymerfilmstruktur gemäß Anspruch 6, wobei das Sauerstoff ausspülende Material in direkter Deckung mit den Drucksachen aufgebracht wird.

8. Polymerfilmstruktur gemäß einem der vorhergehenden Ansprüche, **wobei die Struktur ein gedruckter Poly(vinylidenchlorid)** aufgetragener biaxial ausgerichteter Nylonfilm ist, der auf einen Dichtungsfilm laminiert ist.

9. Polymerfilmstruktur gemäß einem der vorhergehenden Ansprüche, wobei die Struktur ein Polyethylenterephthalat/Poly(vinylidenchlorid)/Klebemittel/ Dichtungsmittel beinhaltet.

10. Polymerfilmstruktur gemäß einem der vorhergehenden Ansprüche, wobei die Struktur ein Poly(propylen)/Poly(vinylidenchlorid)/Klebemittel/Dichtungsmittel beinhaltet.

11. Polymerfilmstruktur gemäß einem der vorhergehenden Ansprüche, **wobei die Struktur ein Poly(ethylenterephthalat)/Klebemittel/ coextrudiertes Dichtungsmittel mit Ehtylenvinylalkoholcopolymer** beinhaltet.

12. Polymerfilmstruktur gemäß einem der vorhergehenden Ansprüche, wobei die Filmstruktur aus Material gebildet ist, welches aus der Gruppe, bestehend aus Polyestern, Nylon, Polypropylenen, **Polyethylenen, Polycarbonaten, Polyacrylnitrilen, Polystyrolen,** Ehtylencopolymeren, Poly(vinylidenchloridmethylacrylat) und **lonomeren mit Polyethylen und Metallionen enthaltend, ausgewählt** wird.

13. Polymerfilmstruktur gemäß einem der vorhergehenden Ansprüche, wobei die Sauerstoff-Spülmittelschicht eine Eisenoxidverbindung beinhaltet.

14. Polymerfilmstrukturzusammensetzung gemäß einem der vorhergehenden Ansprüche, wobei das Auftragungsgewicht der Sauerstoff-Spülmittelschicht in dem Bereich von 6,82 kg/ream bis 9,09 kg/ream (15 Ib/ream bis 20 Ib/ream) liegt.

15. Polymerfilmstruktur gemäß einem der vorhergehenden Ansprüche, wobei die Sauerstoff-Spülmittelverbindung eine Substanz oder eine Kombination aus Substanzen mit einer Affinität für die Sauerstoffmoleküle ist.

16. Polymerfilmstruktur gemäß einem der vorhergehenden Ansprüche, die ein Übergangsmetalloxid ist.

17. Ein Verfahren zum Anbringen oder Auftragen einer Sauerstoff-Spülmittelzusammensetzung auf die innere Oberfläche einer Polymerfilmstruktur, wobei die Sauerstoff ausspülende Zusammensetzung mindestens eine Sauerstoff ausspülende Schicht beinhaltet, wobei die Sauerstoff ausspülende Schicht eine Vielzahl von Malen aufgebracht wird, so dass jede anschließend aufgebrachte Schicht genau auf alle zuvor aufgebrachten Schichten passt, und wobei das Verfahren zum Anbringen oder Auftragen **jeder einzelnen Schicht der Sauerstoff-Spülmittelzusammensetzung** folgende Schritte beinhaltet:
(a) Suspendieren des Materials, welches unter Verwendung einer Mess-Rakel-Tinteneinheit mit Kammer oder eines Zwei-Walzen-Farbstempelkissens auf die Netzstruktur angebracht oder aufgetragen werden soll;
(b) Übertragen des auf dem Netz anzubringenden oder aufzutragenden Materials auf eine Farbwalze durch Drehung der Farbwalze in der Rakel-Tinteneinheit mit Kammer oder des Zwei-Walzen-Farbstempelkissens;
(c) Übertragen des auf einer Aniloxwalze anzubringenden oder aufzutragenden Materials auf das Netz durch Drehung der Farbwalze oder des Rakels mit Kammer direkt gegen die Aniloxwalze;
(d) Übertragen des auf die erhöhten Aufdrucke des Plattenzylinders anzubringenden oder aufzutragenden **Materials auf die Netzstruktur durch Drehung der Aniloxwalze** gegen den Plattenzylinder;
(e) Anbringen oder Auftragen des Materials auf die Polymernetzstruktur durch Eingeben der Polymernetzstruktur zwischen den Plattenzylinder, der das Material, welches angebracht werden soll, und den Abprägezylinder hält;
(f) Trocknen der aufgetragenen Seite des Netzes durch Führen des Netzes durch einen Inline-Trockner bei einer Temperatur zwischen 37,7 °C und 121,1 °C (100 °F bis 250 °F);
und
(g) Kühlen der nicht aufgetragenen Seite des Netzes durch Führen der Seite über eine Kühlwalze.

18. Verfahren gemäß Anspruch 17, wobei die Sauerstoff-**Spülmittelzusammensetzung eine Starterschicht; eine pigmentierte** Schicht; eine Sauerstoff ausspülende Schicht und eine Mantelschicht beinhaltet.

19. Verfahren gemäß Anspruch 17 oder Anspruch 18, wobei die Polymerfilmstruktur ein gedruckter Poly(vinylidenchlorid) aufgetragener biaxial ausgerichteter Nylonfilm ist, der auf einen Dichtungsfilm laminiert ist.

20. Verfahren gemäß Anspruch 17, Anspruch 18 oder Anspruch 19, wobei die Sauerstoff-Spülmittelschicht eine Eisenoxidverbindung beinhaltet.

21. Verfahren gemäß einem der Ansprüche 17 bis 20, wobei jedwede Schicht der Sauerstoff ausspülenden Zusammensetzung mehr als ein Mal auf die Polymerfilmstruktur aufgebracht oder aufgetragen wird.

22. Ein Verfahren zum Fertigen einer Polymerfilmstruktur, die eine Sauerstoff ausspülende Zusammensetzung beinhaltet, wobei die Sauerstoff ausspülende Zusammensetzung mindestens eine Sauerstoff ausspülende Schicht beinhaltet, wobei die Sauerstoff ausspülende Schicht eine Vielzahl von Malen aufgebracht wird, so dass jede anschließend aufgebrachte Schicht genau auf alle zuvor aufgebrachten Schichten passt, und wobei das Verfahren das Auftragen der Sauerstoff ausspülenden Zusammensetzung auf die Polymerfilmstruktur durch einen Druckvorgang beinhaltet.

23. Verfahren gemäß Anspruch 22, wobei der Druckvorgang ein Flexodruckvorgang ist.

24. Eine Kunststoffverpackung, die die Filmstruktur gemäß einem der Ansprüche 1 bis 16 beinhaltet.

## Revendications

1. Une structure de film polymère ayant une ou plusieurs couches dans laquelle une composition de piégeage d'oxygène est appliquée sur la couche de surface intérieure de la structure de film polymère et dans laquelle ladite composition de piégeage d'oxygène comporte au moins une couche de piégeage d'oxygène, ladite couche de piégeage d'oxygène étant apposée de façon séquentielle une pluralité de fois de telle sorte que chaque couche appliquée subséquemment soit apposée en concordance avec toutes les couches apposées précédemment.

2. La structure de film polymère selon la revendication 1 dans laquelle la composition de piégeage d'oxygène comporte de surcroît une ou plusieurs couches parmi une couche primaire, une couche pigmentée et une couche de finition.

3. La structure de film polymérique selon la revendication 1 ou la revendication 2 dans laquelle la composition de piégeage d'oxygène comporte une couche primaire, une couche pigmentée, une couche formant piège et une couche de finition dans laquelle chaque couche est apposée de façon séquentielle et dans laquelle n'importe quelle couche peut être apposée plus d'une fois dans les séquences.

4. Une structure de film polymère selon la revendication 1, la revendication 2 ou la revendication 3 dans laquelle chaque couche de la composition de piégeage d'oxygène est apposée de façon séquentielle en utilisant une méthode d'impression.

5. Une structure polymère selon la revendication 4 dans laquelle la méthode d'impression est un procédé d'impression flexographique.

6. Une structure de film polymère selon n'importe lesquelles des revendications précédentes dans laquelle ladite composition de piégeage d'oxygène est appliquée sur la surface intérieure de la structure de film polymère, de telle sorte que la composition de piégeage d'oxygène est apposée en alignement direct sur un élément particulier de la structure de film polymère.

7. Une structure de film polymérique selon la revendication 6 dans laquelle le matériau de piégeage d'oxygène est apposé en alignement direct sur l'imprimé.

8. La structure de film polymère selon n'importe lesquelles des revendications précédentes dans laquelle ladite structure est un film de nylon orienté de façon biaxiale imprimé sur lequel est appliqué du poly(chlorure de vinylidène) imprimé stratifié sur un film de scellage.

9. La structure de film polymère selon n'importe lesquelles des revendications précédentes dans laquelle ladite structure comporte polyéthylène téréphtalate/poly(chlorure de vinylidène)iadhésifiproduit de scellement.

10. Une structure de film polymère selon n'importe lesquelles des revendications précédentes dans laquelle ladite structure comporte poly(propylène)/poly(chlorure de vinylidène)/adhésif/produit de scellement.

11. Une structure de film polymère selon n'importe lesquelles des revendications précédentes dans laquelle ladite structure comporte poly(éthylène téréphtalate)/adhésif/produit de scellement coextrudé avec copolymère éthylène alcool vinylique.

12. La structure de film polymère selon n'importe lesquelles des revendications précédentes dans laquelle ladite structure de film est formée à partir d'un matériau sélectionné dans le groupe consistant en polyesters, nylons, polypropylènes, polyéthylènes, polycarbonates, polyacrylonitrile, polystyrènes, copolymères éthyléniques, poly(méthylacrylate de chlorure de vinylidène) et ionomères ayant du polyéthylène et contenant des ions métalliques.

13. La structure de film polymère selon n'importe lesquelles des revendications précédentes dans laquelle la couche de piégeage d'oxygène comporte un composé à base d'oxyde de fer.

14. La composition de structure de film polymère selon n'importe lesquelles des revendications précédentes dans laquelle le poids de revêtement de la couche de piégeage d'oxygène est dans la gamme allant de 6,82 kg/rame à 9,09 kg/rame (15 livres/rame à 20 livres/rame).

15. La structure de film polymère selon n'importe lesquelles des revendications précédentes dans laquelle le composé de piégeage d'oxygène est une substance ou une combinaison de substances ayant une affinité pour les molécules d'oxygène.

16. La structure de film polymère selon n'importe lesquelles des revendications précédentes qui est un oxyde de métal de transition.

17. Une méthode destinée à fixer et à appliquer une composition de piégeage d'oxygène sur la surface intérieure d'une structure de film polymère dans laquelle ladite composition de piégeage d'oxygène comporte au moins une couche de piégeage d'oxygène, ladite couche de piégeage d'oxygène étant apposée une pluralité de fois, de telle sorte que chaque couche subséquemment apposée est apposée en concordance avec toutes les couches apposées précédemment, et dans laquelle la méthode destinée à fixer ou à appliquer chaque couche individuelle de ladite composition de piégeage d'oxygène comporte les étapes suivantes :
(a) suspendre le matériau devant être fixé ou appliquer sur ladite structure formant support à l'aide d'une unité d'encrage de dosage avec une chambre à racle ou un bac à encre à deux rouleaux ;
(b) transférer le matériau devant être fixé ou appliquer sur ladite toile à un rouleau barboteur par rotation du rouleau barboteur dans l'unité d'ancrage avec une chambre à racle ou le bac à encre à deux rouleaux ;
(c) transférer le matériau devant être fixé ou appliquer sur ladite toile à un rouleau anilox par rotation du rouleau barboteur ou de la chambre à racle directement contre le rouleau anilox ;
(d) transférer le matériau devant être fixé ou appliqué sur ladite structure formant support sur les impressions en relief du cylindre de plaque par rotation du rouleau anilox contre le cylindre de plaque ;
(e) fixer ou appliquer le matériau sur la structure formant support polymère en introduisant la structure formant support polymère entre le cylindre de plaque qui contient le matériau devant être fixé et le cylindre d'impression ;
(f) faire sécher le côté enduit du support en faisant passer ledit support par un sécheur en ligne à une température comprise entre 37,7 °C et 121,1 °C (100 °F et 250 °F) ;
et
(g) faire refroidir le côté non enduit de la toile en faisant passer ledit côté au-dessus d'un rouleau refroidisseur.

18. La méthode selon la revendication 17 dans laquelle la composition formant piège d'oxygène comporte une couche primaire ; une couche pigmentée ; une couche de piégeage d'oxygène et une couche de finition.

19. La méthode selon la revendication 17 ou la revendication 18 dans laquelle la structure de film polymère est un film de nylon orienté de façon biaxiale imprimé sur lequel est appliqué du poly(chlorure de vinylidène) stratifié sur un film de scellage.

20. La méthode selon la revendication 17, la revendication 18 ou la revendication 19 dans laquelle la couche formant piège d'oxygène comporte un composé à base d'oxyde de fer.

21. La méthode selon n'importe lesquelles des revendications 17 à 20 dans laquelle n'importe lesquelles des couches de la composition de piégeage d'oxygène sont apposées ou appliquées sur la structure de film polymère plus d'une fois.

22. Une méthode destinée à préparer une structure de film polymère comportant une composition de piégeage d'oxygène dans laquelle ladite composition de piégeage d'oxygène comporte au moins une couche de piégeage d'oxygène, ladite couche de piégeage d'oxygène étant apposée une pluralité de fois de telle sorte que chaque couche subséquemment apposée soit apposée en concordance avec toutes les couches apposées précédemment, et dans laquelle ladite méthode comporte appliquer ladite composition de piégeage d'oxygène sur ladite structure de film polymère par un procédé d'impression.

23. La méthode selon la revendication 22 dans laquelle le procédé d'impression est un procédé d'impression flexographique.

24. Un emballage en plastique comportant la structure de film de n'importe lesquelles des revendications 1 à 16.
